# EUROPÄISCHE PATENTSCHRIFT

(11) **EP 2 885 093 B1**
(45) Veröffentlichungstag und Bekanntmachung des Hinweises auf die Patenterteilung: **25.11.2026**
(21) Anmeldenummer: 13745861.8
(22) Anmeldetag: 08.08.2013
(51) Int. Cl.: B23B 29/26, B23B 29/24

(54) **WERKZEUG UND VERFAHREN ZUM RIFFELN EINER WALZE**
TOOL AND METHOD FOR CORRUGATING A ROLLER
OUTIL ET PROCÉDÉ DESTINÉS À CANNELER UN CYLINDRE

(30) Priorität: 17.08.2012 EP 12180862
(43) Veröffentlichungstag der Anmeldung: 24.06.2015
(73) Patentinhaber: Bühler GmbH, 38114 Braunschweig (DE)
(72) Erfinder: BEST, Heidrun, 38112 Braunschweig (DE); SANTELMANN, Karsten, 38518 Gifhorn (DE); CHRZAN, Witold, 38259 Salzgitter (DE); REUPKE, Björn, 38275 Steinlah (DE)
(74) Vertreter: Hepp Wenger Ryffel AG
(86) Internationale Anmeldenummer: PCT/EP2013/066639
(87) Internationale Veröffentlichungsnummer: WO 2014/026909

(56) Entgegenhaltungen:
- EP-A1- 0 564 425
- WO-A1-2005/007330
- DE-A1- 102005 024 746
- DE-A1- 3 128 121
- DE-A1- 3 237 587
- US-A- 3 122 818
- US-A- 4 100 826
- US-A1- 2004 191 008
- US-A1- 2007 084 315

## Beschreibung

Die Erfindung betrifft ein Werkzeug zur insbesondere spanenden Bearbeitung eines Werkstücks sowie ein Verfahren zum Riffeln einer Walze.

Aus der WO 2008/064656 A1 ist ein spanendes Werkzeug mit einem Werkzeugträger und einer am Werkzeugträger angebrachten Kassette bekannt. Eine Schneidplatte ist an der Kassette angeordnet. Das Werkzeug weist ein Keilgetriebe als Justiermittel auf zum Justieren der Kassette bezogen auf eine Längsachse des Werkzeugträgers.

Dieser vorbekannte Stand der Technik weist den Nachteil auf, dass eine Ausrichtung, d. h. eine Winkelstellung, der Schneidplatte zum zu bearbeitenden Werkstück einen jeweils hohen Aufwand beim Wechsel der Schneidplatte erfordert. Zudem ist nicht immer eine ausreichende Genauigkeit der Ausrichtung beispielsweise für eine Riffelung von Walzen erreichbar, was gegebenenfalls zu einer Überriffelung von bereits geschnittenen Riffeln führen kann. Somit kann das Werkzeug zum Schneiden meist lediglich in einer Bearbeitungsrichtung mit der ausreichenden Schneidgenauigkeit verwendet werden, was eine heute nicht mehr ausreichende Bearbeitungszeit des Werkstücks erlaubt.

Das Dokument DE 32 37 587 A1 offenbart eine Vorrichtung zur Herstellung von Gewindeanschlüssen an Grossrohren, insbesondere an Bohrrohren für die Erdölindustrie, mit einem an einem Spindelstock drehbar gelagerten und von einem Antriebsmotor antreibbaren Werkzeugkopf, der mit mindestens einem in radialer Richtung durch eine Zustellvorrichtung verschiebbaren Werkzeugschlitten versehen und zusammen mit dem Spindelstock auf einem Längstisch gelagert ist, welcher gegenüber einem Maschinenbett durch einen Längsantrieb relativ zum ortsfest angeordneten Grossrohr verschiebbar ist. Um die Bearbeitungsvorgänge zu vereinfachen und ohne Werkzeugwechsel durchführen zu können, ist der umlaufende Werkzeugkopf mit zwei gegenläufigen Werkzeugschlitten versehen, die jeweils zwei im Abstand voneinander angeordnete Werkzeugböcke aufweisen, an denen jeweils ein Werkzeughalter mit mindestens einem Werkzeug aus-wechselbar befestigt ist.

Weiterhin offenbart das Dokument DE 31 28 121 A1 ein für die Endenbearbeitung von Wellen, Zapfen, Rohren und dergleichen bestimmtes Drehwerkzeug. Dieses weist einen mit der Spindel einer Drehmaschine verbindbaren, scheibenförmigen Grundkörper und mehrere an diesem lösbar befestigte Werkzeughalter auf, von denen jeder mindestens einen mittels einer Stellschraube radial zur Drehachse verstellbaren und festklemmbaren, eine Schneidplatte ragenden Schneidplattenträger besitzt. Der Grundkörper weist für jeden Werkzeughalter mindestens eine zur Drehachse parallele Aufnahmebohrung und der Werkzeughalter einen in diese passenden zylindrischen Schaft auf. Jeder Werkzeughalter hat eine parallel zur Drehachse bzw. Schaftachse verschraubbare Stellschraube, die sich am Grundkörper abstützt. Ferner sind zwischen dem Schaft und dem Grundkörper eine Verdrehsicherung und eine Klemmeinrichtung vorgesehen, mittels welcher der Schaft in der eingestellten Axialstellung festklemmbar ist.

Aus der US 2007/084315 A1 ist ein Werkzeug gemäss dem Oberbegriff des Anspruchs 1 bekannt.

Es ist daher eine Aufgabe der vorliegenden Erfindung, die Nachteile des Bekannten zu vermeiden, insbesondere also ein Werkzeug und ein Verfahren zum Walzenriffeln bereitzustellen, mit denen die erforderliche Genauigkeit der Ausrichtung eines Bearbeitungswerkzeugs einfach und zuverlässig erzielbar ist und eine effiziente und zeitsparende Bearbeitung des Werkstücks ermöglicht wird.

Diese Aufgaben werden durch ein Werkzeug sowie ein Verfahren gemäss den unabhängigen Ansprüchen gelöst.

Das erfindungsgemässe Werkzeug ist insbesondere zur spanenden Bearbeitung eines Werkstücks geeignet, welches insbesondere eine Walze ist. Das Werkzeug ist mittels eines Linearantriebs in einer ersten Bearbeitungsrichtung und in einer der ersten Bearbeitungsrichtung im Wesentlichen entgegengesetzten zweiten Bearbeitungsrichtung bewegbar. Dies hat den Vorteil, dass die Werkstückbearbeitung mittels des Werkzeugs in einer Vorwärtsbewegung und einer Rückwärtsbewegung ermöglicht wird, was die Bearbeitung des Werkstücks effizienter macht, da im Gegensatz zum Stand der Technik auch die Rückwärtsbewegung nutzbar ist.

Das Werkzeug umfasst einen Werkzeugkörper zur Aufnahme von zwei im Wesentlichen parallel zueinander angeordneten Serien von zumindest zwei in Reihe angeordneten Bearbeitungseinrichtungen. Die Bearbeitungseinrichtungen sind Schneideinrichtungen, bevorzugt zum Riffeln der Walze.

Unter einer Anordnung von Schneideinrichtungen "im Wesentlichen parallel" wird im Sinne der vorliegenden Anmeldung verstanden, dass die Schneideinrichtungen bezogen auf die Bearbeitungsrichtung seitlich zueinander versetzt sind und insbesondere die Schneidkanten der Schneideinrichtungen im Wesentlichen parallel zueinander verlaufen.

Unter einer Anordnung der Schneideinrichtungen "in Reihe" wird im Sinne der vorliegenden Anmeldung verstanden, dass, bezogen auf die Bearbeitungsrichtung beispielsweise entlang einer Werkstückoberfläche, die Schneideinrichtungen im Wesentlichen die gleichen Bereiche des Werkstücks nacheinander bearbeiten.

Dies hat den Vorteil, dass in einem Bearbeitungsschritt, beispielsweise einer Bewegung der Schneideinrichtungen entlang einer Walzenachse einer Walze, eine effizientere Bearbeitung erreichbar ist, da in einem Arbeitsschritt mehr Material entfernbar ist. Zudem wird die Zuverlässigkeit der Bearbeitung durch die zwei in Reihe angeordneten Schneideinrichtungen erhöht.

Ein erstes Paar der Schneideinrichtungen ist für die erste Bearbeitungsrichtung angeordnet und ein zweites Paar der Schneideinrichtungenfachs für die zweite Bearbeitungsrichtung. Die Schneideinrichtungen sind von einer Aufnahme aufgenommen. Die Schneideinrichtungen einer ersten der Serien und die Schneideinrichtungen einer zweiten der Serien bezogen auf die Bearbeitungsrichtung sind seitlich zueinander versetzt.

Das Werkzeug kann zur Bearbeitung einer Walze ausgebildet und in der ersten Bearbeitungsrichtung und in der zweiten Bearbeitungsrichtung bewegbar sein.

Das erfindungsgemässe Werkzeug kann eine Kassette umfassen. Zumindest eine Schneideinrichtung ist an und/oder in der Kassette insbesondere lösbar befestigbar. Das Werkzeug kann eine Positioniereinrichtung zur Ausrichtung der Kassette im Werkzeugkörper in einer vorbestimmten Position aufweisen.

Dies hat den Vorteil, dass die Ausrichtung der Kassette und damit der Schneideinrichtung zum Riffeln der Walze unabhängig vom Bediener vorbestimmt werden kann, wodurch eine höhere Genauigkeit der Ausrichtung der Schneideinrichtung erreicht werden kann. Zudem werden Bedienfehler minimiert. Beispielsweise kann ein Set von Kassetten mit unterschiedlich ausgerichteten Bearbeitungswerkzeugen bereitgestellt werden, die der Bediener lediglich entsprechend den Anforderungen auswählt. Somit wird zudem die Handhabung des Werkzeugs verbessert und erleichtert, da der Bediener keine Einstellung der Ausrichtung der Schneideinrichtung wie auch keine Einstellung der Position der Schneideinrichtung im Wesentlichen entlang der Längsachse der Schneideinrichtung vornehmen muss.

Die "Positioniereinrichtung zur Ausrichtung der Kassette" dient vorliegend der Positionierung der Kassette in einer vorbestimmten Winkelposition im Werkzeugkörper. Eine derartige Positioniereinrichtung dient insbesondere nicht der Positionierung der Schneideinrichtung entlang einer Längsachse der Kassette oder des Werkzeugs, d. h. insbesondere nicht der Justierung des Abstands einer vom Werkzeug abgewandten Schneidkante der Schneideinrichtung.

Bevorzugt umfasst die Positioniereinrichtung einen am Werkzeugkörper angeordneten Spalt. Dies hat den Vorteil, dass die Position des Spalts genau einstellbar oder eingestellt ist, in welcher ein entsprechendes Element der Kassette zur Ausrichtung der Kassette im Werkzeugkörper in diesen eingreifen kann.

Bevorzugt ist an der Kassette ein Vorsprung zum Eingreifen in den Spalt angeordnet. Dies hat den Vorteil, dass der Vorsprung in den Spalt zur Ausrichtung der Kassette im Werkzeugkörper eingreifen kann, wobei der Vorsprung einfach und zuverlässig herstellbar und an der Kassette anordenbar ist. Somit lässt sich eine hohe Genauigkeit der Ausrichtung der Kassette bei einfacher Handhabung der Positioniereinrichtung erreichen.

Besonders bevorzugt ist der Vorsprung lösbar mit der Kassette verbindbar. Dies hat den Vorteil, dass entsprechend den Anforderungen der Vorsprung mit der Kassette verbindbar ist, was die Anzahl notwendiger Kassetten reduziert und damit die Kosten verringert, da die beispielsweise für einen Produktionslauf notwendigen Kassetten mit Schneideinrichtung und Vorsprung jeweils vorbereitet werden können.

Alternativ ist es möglich, den Vorsprung fest mit der Kassette zu verbinden, beispielsweise durch Verschweissen oder Verlöten. Dies hat den Vorteil, dass die Handhabung weiter vereinfacht und Bedienfehler noch zuverlässiger vermieden werden.

Bevorzugt ist der Vorsprung an einer Schablone angeordnet, wobei die Schablone eine Schablonenöffnung zur Aufnahme der Kassette aufweist. Insbesondere ist zumindest abschnittsweise die äussere Form der Kassette im Wesentlichen komplementär zur Form der Schablonenöffnung. Insbesondere sind die Form der Schablonenöffnung und die äussere Form der Kassette derart ausgestaltet, dass die Schablone und die Kassette in einer bestimmten Winkelstellung zueinander angeordnet sind.

Dies hat den Vorteil, dass eine Kombination aus Schablone und Kassette flexibel einsetzbar ist. Zudem wird gegebenenfalls die Anzahl notwendiger Kassetten reduziert, was kostengünstig ist. Beispielsweise ist es möglich, dass Kassetten mit identischer Anordnung der Bearbeitungswerkzeuge montiert werden und jeweils nach Bedarf durch Kombination aus Schablone und Kassette die Ausrichtung der Kassette im Werkzeug durch Auswahl der Schablone bestimmt wird.

Bevorzugt ist am und/oder im Spalt eine Befestigungseinrichtung zur Befestigung des Vorsprungs im Spalt angeordnet. Insbesondere erfolgt die Befestigung mittels Reibschluss.

Dies hat den Vorteil einer einfach ausgestalteten und zuverlässig funktionierenden Art und Weise der Befestigung des Vorsprungs im Werkzeugskörpereingriff. Beispielsweise kann dies durch Schrauben, die auf gegenüberliegenden Seitenflächen des Vorsprungs eine Kraft ausüben, erreicht werden.

Bevorzugt ist am und/oder im Werkzeugkörper eine Kassettenbefestigung angeordnet. Insbesondere erfolgt die Kassettenbefestigung mittels Reibschluss. Dies hat den Vorteil der zuverlässigen Befestigung der Kassette im Werkzeugkörper, die einfach handhabbar ist.

Bevorzugt weist die Kassette einen Griff auf. Dies hat den Vorteil, dass die Handhabung der Kassette beispielsweise beim Einsetzen in den Werkzeugkörper oder Entnehmen aus dem Werkzeugkörper vereinfacht wird.

Besonders bevorzugt weist die der Bearbeitungsrichtung zugewandte Schneideinrichtung bezogen auf eine Längsachse des Werkzeugs einen ersten Abstand vom Werkzeugkörper kleiner als einen zweiten Abstand der der Bearbeitungsrichtung abgewandten Schneideinrichtung auf. Insbesondere weist eine Schneidkante der der Bearbeitungsrichtung zugewandten Schneideinrichtung einen kleineren Abstand vom Werkzeugkörper als die Schneidkante der der Bearbeitungsrichtung abgewandten Schneideinrichtung.

Insbesondere beträgt die Differenz der Abstände zwischen den in Reihe angeordneten Schneideinrichtungen 0,06 mm bis 0,1 mm und bevorzugt 0,08 mm bis 0,1 mm.

Dies hat den Vorteil, dass mit der der Bearbeitungsrichtung zugewandten Schneideinrichtung eine Nut oder eine Riffel einer ersten Tiefe schneidbar ist und mit der der Bearbeitungsrichtung abgewandten Schneideinrichtung die Nut oder der Riffel weiter vertieft werden kann in einem Arbeitsschritt. In der Praxis hat es sich gezeigt, dass üblicherweise mit einer Schneideinrichtung eine Tiefe einer Riffel von bis zu 0,1 mm erreichbar ist; durch Anordnung von zwei in Reihe angeordneten Schneideinrichtungen mit einer Höhendifferenz ist somit in einem Arbeitsschritt eine Riffel mit einer grösseren Tiefe von beispielsweise 0,2 mm erreichbar, was die Werkstückbearbeitung effizienter macht.

Unter einer "Längsachse des Werkzeugs" wird im Sinne der vorliegenden Anmeldung eine Achse im Wesentlichen parallel zur Längsachse der Schneideinrichtung verstanden.

Offenbart, aber nicht an sich beansprucht ist zudem eine Schablone für ein Werkzeug wie oben beschrieben. Die Schablone umfasst einen Vorsprung zum Eingreifen in einen Spalt eines Werkzeugkörpers. Die Schablone weist eine Schablonenöffnung auf zur Aufnahme einer Kassette. Insbesondere zumindest abschnittsweise ist die äussere Form der Kassette im Wesentlichen komplementär zur Form der Schablonenöffnung.

Offenbart, aber nicht an sich beansprucht ist weiterhin ein Set umfassend zumindest eine Schablone wie oben beschrieben und ein Werkzeug mit zumindest einer Kassette wie oben beschrieben. Ein weiterer Aspekt der vorliegenden Erfindung betrifft ein Verfahren zum Riffeln einer Walze mit einem Werkzeug. Insbesondere wird ein Werkzeug wie oben beschrieben verwendet. Das Werkzeug umfasst einen Werkzeugkörper und/oder eine Kassette zur Aufnahme von zwei im Wesentlichen parallel zueinander angeordneten Paaren von zumindest zwei in Reihe angeordneten Schneideinrichtungen. Ein erstes Paar von Schneideinrichtungen ist für eine erste Bearbeitungsrichtung angeordnet und ein zweites Paar von Schneideinrichtungen ist für eine der ersten Bearbeitungsrichtung im Wesentlichen entgegengesetzte Bearbeitungsrichtung angeordnet. Das Verfahren umfasst den Schritt des Positionierens des ersten Paares an der Walze. Anschliessend erfolgt ein Rotieren der Walze um die Walzenachse in einer ersten Drehrichtung b, insbesondere um einen Winkelabschnitt, und im Wesentlichen gleichzeitigem Bewegen des Werkzeugs. Insbesondere erfolgt das Bewegen des Werkzeugs mittels eines Linearantriebs. Das Werkzeug wird entlang der Walzenachse in der ersten Bearbeitungsrichtung zum Herstellen einer Riffel in der Walze bewegt. Insbesondere wird das Werkzeug während des Rotierens entlang der gesamten Walzenlänge t bewegt. Anschliessend erfolgt ein Positionieren des zweiten Paares in der Riffel, der insbesondere in einem vorherigen Verfahrensschritt geschnitten wurde. Anschliessend erfolgt ein Rotieren der Walze um die Walzenachse in einer zweiten Drehrichtung **b,** insbesondere um einen negativen Winkelabschnitt, und im Wesentlichen gleichzeitigem Bewegen des Werkzeugs entlang der Walzenachse in der zweiten Bearbeitungsrichtung entlang der Riffel. Die zweite Bearbeitungsrichtung ist der ersten Bearbeitungsrichtung im Wesentlichen entgegengesetzt. Insbesondere erfolgt das Bewegen des Werkzeugs mittels des Linearantriebs. Insbesondere wird das Werkzeug während des Rotierens der Walze entlang der gesamten Walzenlänge bewegt.

Dies hat den Vorteil der effizienten und zuverlässigen Herstellung von Riffeln auf einer Walze.

Unter einem "Rotieren um einen negativen Winkelabschnitt" wird vorliegend ein Rotieren über den in einem vorherigen Schritt überstrichenen Winkelabschnitt in entgegengesetzter Richtung verstanden.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: Perspektivische Darstellung eines erfindungsgemässen Werkzeugs mit Kassette und Schneideinrichtungen;
- Figur 2:: perspektivische Darstellung einer Kassette, wie diese im Werkzeug gemäss Figur 1 aufgenommen ist,
- Figur 3:: Draufsicht auf eine Schablone zur Ausrichtung der Kassette gemäss Figur 2;
- Figur 4:: perspektivische Darstellung eines Werkzeugkörpers eines erfindungsgemässen Werkzeugs wie in Figur 1 dargestellt;
- Figur 5:: perspektivische Darstellung der Kassette gemäss Figur 2 ohne Mantel und Boden;
- Figur 6:: perspektivische Darstellung von vier Schneideinrichtungen für das erfindungsgemässe Werkzeug gemäss Figur 1;
- Figur 7:: schematische Darstellung in einer Vorderansicht eines alternativen erfindungsgemässen Werkzeugs und einer Walze für eine erste Bearbeitungsrichtung;
- Figur 8:: schematische Darstellung der Vorderansicht gemäss Figur 7 des erfindungsgemässen Werkzeugs und der Walze für eine zweite Bearbeitungsrichtung;
- Figur 9:: schematische Darstellung einer Seitenansicht eines nicht erfindungsgemässen Werkzeugs mit zwei Schneideinrichtungen;
- Figur 10:: vergrösserte schematische Darstellung des Werkzeugs gemäss Figur 9;
- Figur 11:: perspektivische Darstellung des Mantels der Kassette gemäss Figur 2.

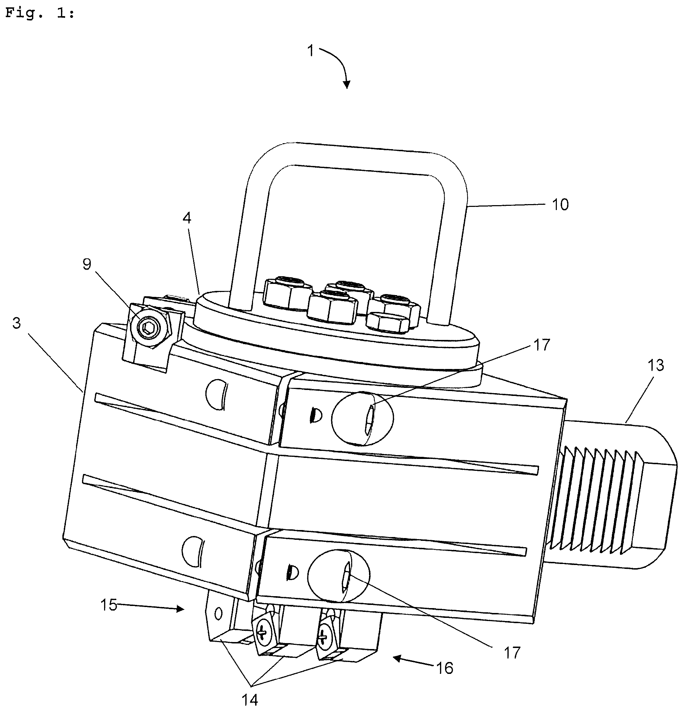

In Figur 1 ist in perspektivischer Darstellung ein erfindungsgemässes Werkzeug 1 dargestellt. Das Werkzeug 1 weist einen Werkzeugkörper 3 zur Aufnahme einer Kassette 4 auf. Der Werkzeugkörper 3 umfasst eine Befestigungseinrichtung 9 zur Befestigung eines hier nicht sichtbaren Vorsprungs der Kassette 4 zur Ausrichtung der Kassette 4 im Werkzeugkörper 3.

Der Werkzeugkörper 3 umfasst eine Kassettenbefestigung 17 zur sicheren Montage der Kassette 4 im Werkzeugkörper 3. Zudem weist der Werkzeugkörper 3 einen Werkzeughalter 13 umfassend einen Haltearm auf zur Aufnahme in einem Werkzeugträger, der beispielsweise mit einem Linearantrieb wirkverbunden ist zum Positionieren und Bearbeiten eines Werkstücks mit dem Werkzeugs 1. Der Werkzeughalter 13 ist als dem Fachmann bekannter Typ VDI 50 ausgebildet.

Die Kassette 4 umfasst einen Griff 10 zur einfachen Handhabung der Kassette 4.

Die Kassette 4 umfasst als Bearbeitungseinrichtung vier Schneideinrichtungen 14, von denen lediglich drei hier sichtbar sind. Somit sind in der Kassette 4 ein erstes Paar 15 von Schneideinrichtungen 14 und ein zweites Paar 16 von Schneideinrichtungen 14 angeordnet. Das erste Paar 15 ist dabei für eine erste Bearbeitungsrichtung im Wesentlichen parallel zu einer Längsachse des Haltearms des Werkzeughalters 13 und das zweite Paar 16 für eine entgegengesetzte Bearbeitungsrichtung angeordnet.

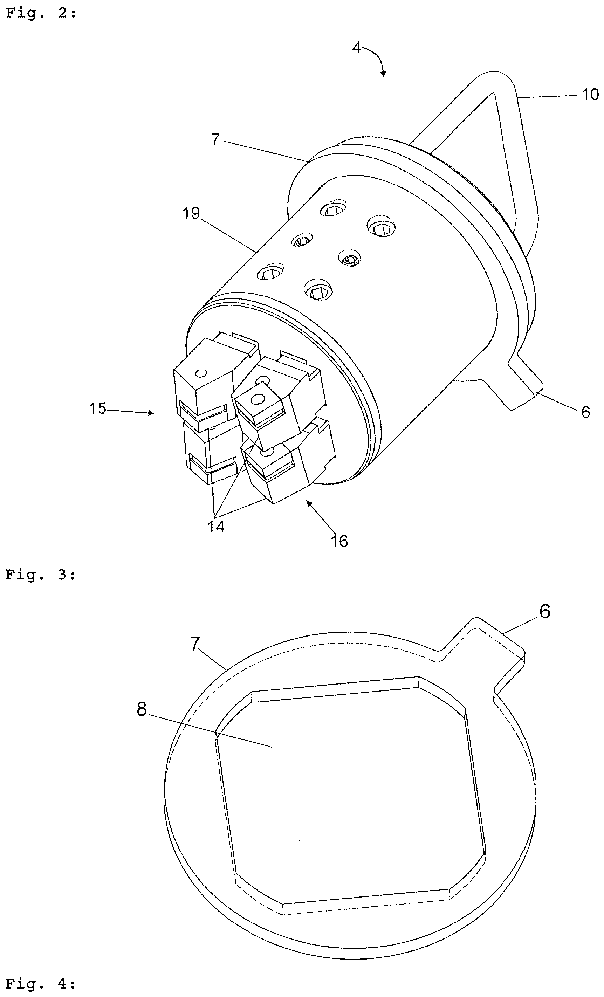

In Figur 2 ist in perspektivischer Darstellung eine Kassette 4 gemäss Figur 1 dargestellt.

Gleiche Referenzzeichen bezeichnen gleiche Merkmale in allen Figuren und werden deshalb nur bei Bedarf erneut erläutert.

An der Kassette 4 umfassend den Mantel 19 ist eine Schablone 7 mit einem Vorsprung 6 angeordnet, die in eine komplementäre Aussparung bzw. einen Spalt eingreifen kann zur Ausrichtung der Kassette im Werkzeugkörper. Die Schablone 7 ist lösbar mit der Kassette 4 verbunden.

In Figur 3 ist in einer Draufsicht eine Schablone 7 mit Vorsprung 6 gemäss Figur 2 dargestellt. Die Schablone 7 weist eine Schablonenöffnung 8 auf, in die die Kassette eingreifen kann.

Zumindest abschnittsweise ist die äussere Form der Kassette im Wesentlichen komplementär zur Form der Schablonenöffnung 8, so dass die Kassette in der Schablonenöffnung 8 eine definierte Ausrichtung einnimmt.

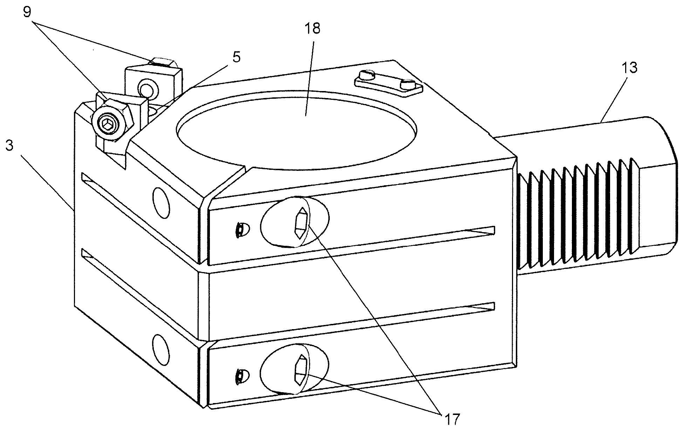

In Figur 4 ist in perspektivischer Darstellung der Werkzeugkörper 3 gemäss Figur 1 dargestellt.

Der Werkzeugkörper 3 weist einen Spalt 5 für den an der Kassette angeordneten Vorsprung auf, so dass die Kassette eine vorbestimmte Ausrichtung in dem Werkzeugkörper 3 einnimmt. Zur Aufnahme einer Kassette weist der Werkzeugkörper 3 eine Kassettenaufnahme 18 auf.

Am Spalt 5 ist eine Befestigungseinrichtung 9 angeordnet, die hier als zwei sich gegenüberliegende Schrauben ausgebildet ist. Im eingegriffenen Zustand des Vorsprungs im Spalt 5 sind die Schrauben so einstellbar, dass eine Kraft auf gegenüberliegende Flächen des Vorsprungs ausübbar ist zur Befestigung des Vorsprungs im Spalt 5 insbesondere mittels Reibschluss.

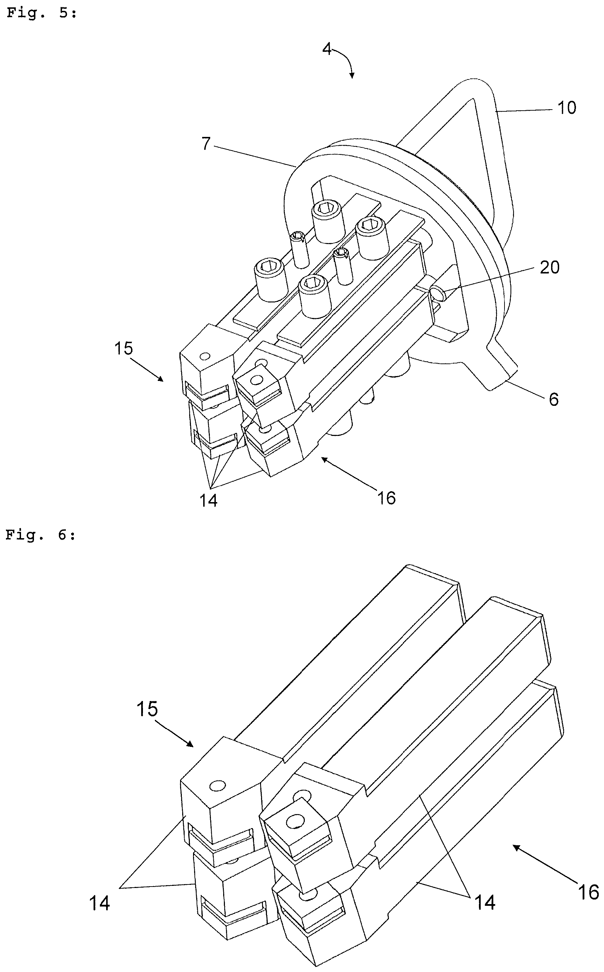

In Figur 5 ist die Kassette 4 gemäss Figur 2 dargestellt. In der vorliegenden Darstellung wurden der Mantel und der Boden der Kassette 4 zur Sichtbarmachung der Anordnung der Schneideinrichtungen 14 in der Kassette 4 weggelassen. Die Kassette 4 umfasst eine als Schrauben ausgebildete Einrichtung 20 zur Befestigung und Ausrichtung des Mantels, wobei lediglich eine von zwei Schrauben sichtbar ist.

In Figur 6 sind in perspektivischer Darstellung die vier Schneideinrichtungen 14 dargestellt, wie diese in der Kassette gemäss Figur 2 angeordnet sind. Zur besseren Sichtbarmachung dieser Anordnung wurden alle weiteren Teile der Kassette in der vorliegenden Darstellung entfernt.

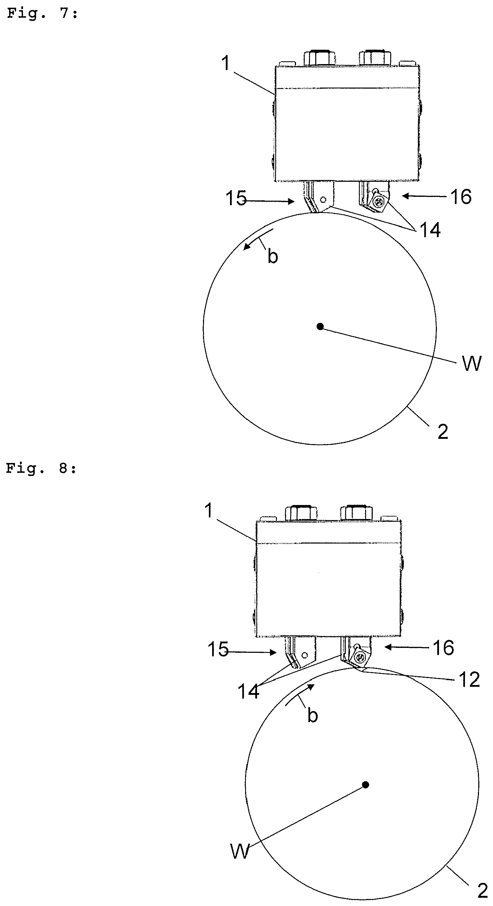

In Figur 7 ist in einer schematischen Darstellung in einer Vorderansicht ein alternatives erfindungsgemässes Werkzeug 1 gezeigt, welches an einer Walze 2 positioniert ist.

Das Werkzeug 1 umfasst ein erstes Paar 15 und ein zweites Paar 16 von Schneideinrichtungen 14 auf. Die Schneideinrichtungen 14 des ersten Paares sind in Reihe angeordnet. Die Schneideinrichtungen 14 des zweiten Paares 16 sind ebenfalls in Reihe angeordnet, wobei das erste Paar 15 und das zweite Paar 16 im Wesentlichen parallel zueinander angeordnet sind. Das erste Paar 15 ist für eine erste Bearbeitungsrichtung angeordnet und das zweite Paar 16 für eine der ersten Bearbeitungsrichtung im Wesentlichen entgegengesetzte Bearbeitungsrichtung.

Die Walze 2 ist im unbearbeiteten Zustand dargestellt. Für die Bearbeitung wird die Walze 2 um die Walzenachse W in einer ersten Drehrichtung b rotiert. Gleichzeitig wird das Werkzeug 1 mittels eines hier nicht gezeigten Antriebs parallel zur durch die Rotation der Walze 2 entlang des Sektors b mathematisch definierten Rotationsrichtung bewegt, d.h. aus der Zeichenebene auf den Beobachter zu.

In Figur 8 ist die Anordnung aus Werkzeug und Walze gemäss Figur 7 gezeigt nach dem ersten Bearbeitungsschritt und Positionieren des zweiten Paares 16 der Schneideinrichtungen 14 in einer Riffel 12. Diese Riffel 12 wurde in dem in Figur 7 dargestellten Bearbeitungsschritt in der Walze 2 erzeugt.

Für die weitere Bearbeitung der Riffel 12 wird die Walze 2 in einer zweiten Drehrichtung b um einen negativen Winkelabschnitt rotiert, der eine Rotationsrichtung im mathematischen Sinne in die Zeichenebene hinein definiert. Im Wesentlichen gleichzeitig wird das Werkzeug 1 parallel zur Rotationsrichtung entlang der Riffel 12 beispielsweise zur weiteren Vertiefung der Riffel 12 bewegt.

Anschliessend kann der Prozess so oft wiederholt werden, bis die entsprechende Geometrie der Riffel 12 erreicht ist oder auch die Walze 2 eine Riffelung auf der ganzen Walzenoberfläche aufweist.

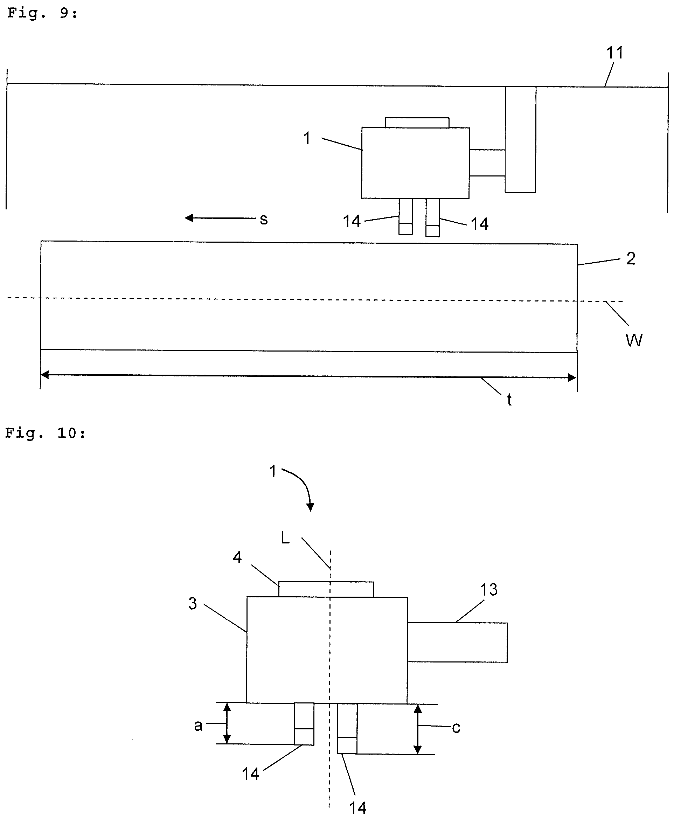

In Figur 9 ist in einer Seitenansicht schematisch ein Werkzeug 1 mit zwei Schneideinrichtungen 14 dargestellt. Die Schneideinrichtungen 14 sind in Reihe zueinander angeordnet.

Das Werkzeug 1 ist an einem Linearantrieb 11 befestigt zur Bewegung des Werkzeugs 1 entlang der Bearbeitungsrichtung s. Die Schneideinrichtungen 14 sind so ausgestaltet, dass nur eine Bearbeitung in der Bearbeitungsrichtung s und nicht in der Gegenrichtung erfolgt.

Die Walze 2 mit der Walzenachse W weist eine Walzenlänge t von 1600 mm, die die maximale Walzenlänge t ist, auf.

Für die Bearbeitung der Walze 2 mit dem Werkzeug 1 wird das Werkzeug 1 an der Walze 2 positioniert und entlang der Bearbeitungsrichtung s mittels des Linearantriebs 11 bewegt. Während der Bewegung des Werkzeugs 1 wird die Walze 2 um die Walzenachse W um einen Winkelabschnitt rotiert.

Während der Rückbewegung entgegen der Bearbeitungsrichtung s nach der Bearbeitung der Walze 2 wird die Walze 2 gegebenenfalls um einen negativen Winkelabschnitt rotiert, um den vorher bearbeiteten Abschnitt der Walze 2 erneut zu bearbeiten.

Die der Bearbeitungsrichtung zugewandte Schneideinrichtung 14 weist einen kleineren Abstand vom Werkzeugkörper des Werkzeugs 1 auf als die der Bearbeitungsrichtung s abgewandte Schneideinrichtung 14.

In Figur 10 ist das Werkzeug 1 gemäss Figur 9 in einer vergrösserten Abbildung schematisch dargestellt. Das Werkzeug 1 umfasst den Werkzeugkörper 3 und die Kassette 4, welche die lediglich zwei in Reihe angeordneten Schneideinrichtungen umfasst. Entlang einer Längsachse L des Werkzeugs 1 weist die der Bearbeitungsrichtung zugewandte Schneideinrichtung 14 einen ersten Abstand a vom Werkzeugkörper auf und die der Bearbeitungsrichtung abgewandte Schneideinrichtung einen zweiten Abstand c. Der zweite Abstand c ist grösser als der erste Abstand a. Die Differenz zwischen dem zweiten Abstand c und dem ersten Abstand a beträgt 0,1 mm, wobei der Unterschied hier stark vergrössert dargestellt ist.

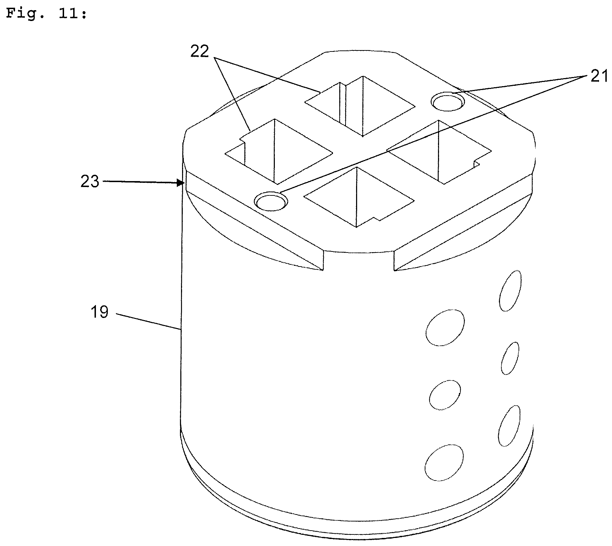

In Figur 11 ist der Mantel 19 der Kassette gemäss Figur 2 dargestellt.

Der Mantel 19 weist bei bestimmungsgemässem Gebrauch auf der dem Griff zugewandten Seite vier Öffnungen 22 zur Aufnahme der vier Schneideinrichtungen auf. Zudem sind zwei Ausrichtungsöffnungen 21 zum Eingreifen für die Mantelausrichtungseinrichtung vorgesehen.

Der Mantel 19 weist zudem auf der dem Griff zugewandten Seite einen Ausrichtungsabschnitt 23 zur Ausrichtung der Kassette in der Schablone. Die äussere Form des Mantels 19 im Bereich des Ausrichtungsabschnitts 23 ist im Wesentlichen komplementär zur Form der Schablonenöffnung.

## Patentansprüche

1. Werkzeug (1) zur insbesondere spanenden Bearbeitung eines Werkstücks, insbesondere einer Walze (2),
wobei das Werkzeug mittels eines Linearantriebs (11) in einer ersten Bearbeitungsrichtung und in einer der ersten Bearbeitungsrichtung im Wesentlichen entgegengesetzten zweiten Bearbeitungsrichtung bewegbar ist,
wobei das Werkzeug (1) einen Werkzeugkörper (3) und zumindest zwei in Reihe angeordnete, als Schneideinrichtungen (14) ausgebildete Bearbeitungseinrichtungen umfasst und wobei die Schneideinrichtungen (14) vom Werkzeugkörper (3) aufgenommen sind,
**dadurch gekennzeichnet, dass**
der Werkzeugkörper (3) zwei im Wesentlichen parallel zueinander angeordnete Serien von zumindest zwei in Reihe angeordneten, als Schneideinrichtungen (14) ausgebildete Bearbeitungseinrichtungen umfasst,
wobei ein erstes Paar (15) der Schneideinrichtungen (14) für die erste Bearbeitungsrichtung angeordnet ist und ein zweites Paar (16) der Schneideinrichtungen (14) für die zweite Bearbeitungsrichtung und
wobei die Schneideinrichtungen (14) einer ersten der Serien und die Schneideinrichtungen (14) einer zweiten der Serien bezogen auf die Bearbeitungsrichtung seitlich zueinander versetzt sind.

2. Werkzeug nach Anspruch 1 zur Bearbeitung einer Walze (2), wobei das Werkzeug (1) entlang einer Achse der Walze (2) in der ersten Bearbeitungsrichtung und in der zweiten Bearbeitungsrichtung bewegbar ist.

3. Werkzeug (1) nach einem der Ansprüche 1 und 2, wobei das Werkzeug (1) eine Kassette (4) umfasst, und wobei zumindest eine der Schneideinrichtungen (14) an und/oder in der Kassette (4) insbesondere lösbar befestigbar ist, und wobei das Werkzeug (1) eine Positioniereinrichtung aufweist zur Ausrichtung der Kassette (4) im Werkzeugkörper (3) in einer vorbestimmten Position.

4. Werkzeug (1) nach Anspruch 3, wobei die Positioniereinrichtung einen am Werkzeugkörper (3) angeordneten Spalt (5) umfasst.

5. Werkzeug (1) nach Anspruch 4, wobei an der Kassette (4) ein Vorsprung (6) angeordnet ist zum Eingreifen in den Spalt (5).

6. Werkzeug (1) nach Anspruch 5, wobei der Vorsprung (6) lösbar mit der Kassette (4) verbindbar ist.

7. Werkzeug (1) nach Anspruch 5 oder 6, wobei der Vorsprung (6) an einer Schablone (7) angeordnet ist, wobei die Schablone (7) eine Schablonenöffnung (8) zur Aufnahme der Kassette (4) aufweist, wobei insbesondere zumindest abschnittsweise die äussere Form der Kassette (4) im Wesentlichen komplementär zur Form der Schablonenöffnung (8) ist.

8. Werkzeug (1) nach einem der Ansprüche 5 bis 7, wobei am und/oder im Spalt (5) eine Befestigungseinrichtung (9) zur Befestigung, insbesondere mittels Reibschluss, des Vorsprungs (6) im Spalt (5) angeordnet ist.

9. Werkzeug (1) nach einem der Ansprüche 3 bis 8, wobei am und/oder im Werkzeugkörper (3) eine Kassettenbefestigung (17), insbesondere mittels Reibschluss, angeordnet ist.

10. Werkzeug (1) nach einem der Ansprüche 3 bis 9, wobei die Kassette (4) einen Griff (10) aufweist.

11. Werkzeug (1) nach einem der Ansprüche 1 bis 10, wobei die der Bearbeitungsrichtung zugewandte Schneideinrichtung (14) bezogen auf eine Längsachse (L) des Werkzeugs (1) einen ersten Abstand (a) vom Werkzeugkörper (3) kleiner als einen zweiten Abstand (c) der der Bearbeitungsrichtung abgewandten Schneideinrichtung (14) aufweist.

12. Verfahren zum Riffeln einer Walze (2) mit einem Werkzeug (1), insbesondere gemäss einem der Ansprüche 1 bis 11, wobei das Werkzeug (1) einen Werkzeugkörper (3) und/oder eine Kassette (4) umfasst zur Aufnahme von zwei im Wesentlichen parallel zueinander angeordneten Paaren von zumindest zwei in Reihe angeordnete Schneideinrichtungen (14), wobei ein erstes Paar (15) der Schneideinrichtungen (14) für eine erste Bearbeitungsrichtung angeordnet ist und ein zweites Paar (16) der Schneideinrichtungen (14) für eine der ersten Bearbeitungsrichtung im Wesentlichen entgegengesetzte Bearbeitungsrichtung, umfassend die folgenden Schritte:
- Positionieren des ersten Paares (15) an der Walze (2);
- Rotieren der Walze (2) um die Walzenachse (W) in einer ersten Drehrichtung (b), insbesondere um einen Winkelabschnitt, und im Wesentlichen gleichzeitiges Bewegen des Werkzeugs (1), insbesondere mittels eines Linearantriebs (11), entlang der Walzenachse (W) in der ersten Bearbeitungsrichtung zum Herstellen einer Riffel (12) in der Walze (2);
- Positionieren des zweiten Paares (16) an und/oder in der Riffel (12);
- Rotieren der Walze (2) um die Walzenachse (W) in einer zweiten Drehrichtung (b), insbesondere um einen negativen Winkelabschnitt, und im Wesentlichen gleichzeitiges Bewegen des Werkzeugs (1), insbesondere mittels des Linearantriebs (11), entlang der Walzenachse (W) in der zweiten Bearbeitungsrichtung entlang der Riffel (12).

## Claims

1. Tool (1) for machining a workpiece, particularly by cutting, especially a roller (2),
wherein the tool is movable by means of a linear drive (11) in a first processing direction and in a second processing direction essentially opposite to the first processing direction,
wherein the tool (1) comprises a tool body (3) and at least two processing devices arranged in series and configured as cutting devices (14), and wherein the cutting devices (14) are received by the tool body (3),
**characterized in that**
the tool body (3) comprises two series, arranged essentially parallel to each other, of at least two processing devices arranged in series and configured as cutting devices (14),
wherein a first pair (15) of the cutting devices (14) is arranged for the first processing direction and a second pair (16) of the cutting devices (14) is arranged for the second processing direction, and
wherein the cutting devices (14) of a first of the series and the cutting devices (14) of a second of the series are laterally offset from each other with respect to the processing direction.

2. Tool according to claim 1 for processing a roller (2),
wherein the tool (1) is movable along an axis of the roller (2) in the first processing direction and in the second processing direction.

3. Tool (1) according to one of claims 1 and 2, wherein the tool (1) comprises a cassette (4), and wherein at least one of the cutting devices (14) is particularly detachably fastenable to and/or in the cassette (4), and wherein the tool (1) has a positioning device for aligning the cassette (4) in the tool body (3) in a predetermined position.

4. Tool (1) according to claim 3, wherein the positioning device comprises a gap (5) arranged on the tool body (3).

5. Tool (1) according to claim 4, wherein a projection (6) is arranged on the cassette (4) for engaging in the gap (5).

6. Tool (1) according to claim 5, wherein the projection (6) is detachably connectable to the cassette (4).

7. Tool (1) according to claim 5 or 6, wherein the projection (6) is arranged on a template (7), wherein the template (7) has a template opening (8) for receiving the cassette (4), wherein in particular at least partially the outer shape of the cassette (4) is essentially complementary to the shape of the template opening (8).

8. Tool (1) according to one of claims 5 to 7, wherein a fastening device (9) for fastening, particularly by friction fit, the projection (6) in the gap (5) is arranged on and/or in the gap (5).

9. Tool (1) according to one of claims 3 to 8, wherein a cassette fastening (17), particularly by friction fit, is arranged on and/or in the tool body (3).

10. Tool (1) according to one of claims 3 to 9, wherein the cassette (4) has a handle (10).

11. Tool (1) according to one of claims 1 to 10, wherein the cutting device (14) facing the processing direction has a first distance (a) from the tool body (3) smaller than a second distance (c) of the cutting device (14) facing away from the processing direction, with respect to a longitudinal axis (L) of the tool (1).

12. Method for knurling a roller (2) with a tool (1), particularly according to one of claims 1 to 11, wherein the tool (1) comprises a tool body (3) and/or a cassette (4) for receiving two pairs, arranged essentially parallel to each other, of at least two cutting devices (14) arranged in series, wherein a first pair (15) of the cutting devices (14) is arranged for a first processing direction and a second pair (16) of the cutting devices (14) for a processing direction essentially opposite to the first processing direction, comprising the following steps:
- Positioning the first pair (15) on the roller (2);
- Rotating the roller (2) about the roller axis (W) in a first rotational direction (b), particularly by an angular section, and essentially simultaneously moving the tool (1), particularly by means of a linear drive (11), along the roller axis (W) in the first processing direction to produce a knurl (12) in the roller (2);
- Positioning the second pair (16) on and/or in the knurl (12);
- Rotating the roller (2) about the roller axis (W) in a second rotational direction (b), particularly by a negative angular section, and essentially simultaneously moving the tool (1), particularly by means of the linear drive (11), along the roller axis (W) in the second processing direction along the knurl (12).

## Revendications

1. Outil (1) pour l'usinage, notamment par enlèvement de copeaux, d'une pièce, notamment d'un cylindre (2),
l'outil étant déplaçable au moyen d'un entraînement linéaire (11) dans une première direction d'usinage et dans une deuxième direction d'usinage sensiblement opposée à la première direction d'usinage,
l'outil (1) comprenant un corps d'outil (3) et au moins deux dispositifs d'usinage agencés en série et conçus comme des dispositifs de coupe (14), les dispositifs de coupe (14) étant reçus par le corps d'outil (3),
**caractérisé en ce que**
le corps d'outil (3) comprend deux séries agencées sensiblement parallèlement l'une à l'autre d'au moins deux dispositifs d'usinage agencés en série et conçus comme des dispositifs de coupe (14),
une première paire (15) des dispositifs de coupe (14) étant agencée pour la première direction d'usinage et une deuxième paire (16) des dispositifs de coupe (14) pour la deuxième direction d'usinage, et
les dispositifs de coupe (14) d'une première des séries et les dispositifs de coupe (14) d'une deuxième des séries étant décalés latéralement l'un par rapport à l'autre par rapport à la direction d'usinage.

2. Outil selon la revendication 1 pour l'usinage d'un cylindre (2), l'outil (1) étant déplaçable le long d'un axe du cylindre (2) dans la première direction d'usinage et dans la deuxième direction d'usinage.

3. Outil (1) selon l'une des revendications 1 et 2, l'outil (1) comprenant une cassette (4), et au moins un des dispositifs de coupe (14) étant fixable, notamment de manière amovible, sur et/ou dans la cassette (4), et l'outil (1) présentant un dispositif de positionnement pour l'alignement de la cassette (4) dans le corps d'outil (3) dans une position prédéterminée.

4. Outil (1) selon la revendication 3, le dispositif de positionnement comprenant une fente (5) agencée sur le corps d'outil (3).

5. Outil (1) selon la revendication 4, un ergot (6) étant agencé sur la cassette (4) pour s'engager dans la fente (5).

6. Outil (1) selon la revendication 5, l'ergot (6) étant connectable de manière amovible à la cassette (4).

7. Outil (1) selon la revendication 5 ou 6, l'ergot (6) étant agencé sur un gabarit (7), le gabarit (7) présentant une ouverture de gabarit (8) pour recevoir la cassette (4), la forme extérieure de la cassette (4) étant, notamment au moins par sections, sensiblement complémentaire à la forme de l'ouverture de gabarit (8).

8. Outil (1) selon l'une des revendications 5 à 7, un dispositif de fixation (9) étant agencé sur et/ou dans la fente (5) pour la fixation, notamment par friction, de l'ergot (6) dans la fente (5).

9. Outil (1) selon l'une des revendications 3 à 8, une fixation de cassette (17) étant agencée sur et/ou dans le corps d'outil (3), notamment par friction.

10. Outil (1) selon l'une des revendications 3 à 9, la cassette (4) présentant une poignée (10).

11. Outil (1) selon l'une des revendications 1 à 10, le dispositif de coupe (14) orienté vers la direction d'usinage présentant, par rapport à un axe longitudinal (L) de l'outil (1), une première distance (a) du corps d'outil (3) inférieure à une deuxième distance (c) du dispositif de coupe (14) éloigné de la direction d'usinage.

12. Procédé de moletage d'un cylindre (2) avec un outil (1), notamment selon l'une des revendications 1 à 11, l'outil (1) comprenant un corps d'outil (3) et/ou une cassette (4) pour recevoir deux paires agencées sensiblement parallèlement l'une à l'autre d'au moins deux dispositifs de coupe (14) agencés en série, une première paire (15) des dispositifs de coupe (14) étant agencée pour une première direction d'usinage et une deuxième paire (16) des dispositifs de coupe (14) pour une direction d'usinage sensiblement opposée à la première direction d'usinage, comprenant les étapes suivantes:
- Positionnement de la première paire (15) sur le cylindre (2);
- Rotation du cylindre (2) autour de l'axe du cylindre (W) dans une première direction de rotation (b), notamment sur un segment angulaire, et déplacement sensiblement simultané de l'outil (1), notamment au moyen d'un entraînement linéaire (11), le long de l'axe du cylindre (W) dans la première direction d'usinage pour la production d'une cannelure (12) dans le cylindre (2);
- Positionnement de la deuxième paire (16) sur et/ou dans la cannelure (12);
- Rotation du cylindre (2) autour de l'axe du cylindre (W) dans une deuxième direction de rotation (b), notamment sur un segment angulaire négatif, et déplacement sensiblement simultané de l'outil (1), notamment au moyen de l'entraînement linéaire (11), le long de l'axe du cylindre (W) dans la deuxième direction d'usinage le long de la cannelure (12).
